# EUROPÄISCHE PATENTSCHRIFT

(11) **EP 1 321 341 B1**
(45) Veröffentlichungstag und Bekanntmachung des Hinweises auf die Patenterteilung: **18.06.2008**
(21) Anmeldenummer: 02024797.9
(22) Anmeldetag: 07.11.2002
(51) Int. Cl.: B60T 13/52

(54) **Ansauggeräuschdämpfer**
Suction noise supressor
Amortisseur des bruits d'aspiration

(30) Priorität: 14.12.2001 DE 10161436
(43) Veröffentlichungstag der Anmeldung: 25.06.2003
(73) Patentinhaber: Dr. Ing. h.c. F. Porsche Aktiengesellschaft, 71287 Weissach (DE)
(72) Erfinder: Pfingst, Jan, 74372 Sersheim (DE)

(56) Entgegenhaltungen:
- DE-A- 19 636 169
- US-A- 5 528 975
- US-A- 5 664 475

## Beschreibung

Die Erfindung bezieht sich auf einen Bremskraftverstärker mit einem Ansauggeräuschdämpfer gemäß dem Oberbegriff von Patentanspruch 1.

Aus der DE 40 27 562 C2 ist ein Bremskraftverstärker bekannt, der ein Steuerventilgehäuse aufweist, das von einem Faltenbalg umschlossen ist und Zuführungen für Ansaugluft zum Bremskraftverstärker über Lufteintrittsöffnungen aufweist, welche von einem Filterelement abgedeckt sind, das aus einem schallabsorbierenden Werkstoff besteht.

Die US 5,528,975 A beschreibt einen Bremskraftverstärker mit einem in einem Gehäuse gleitenden Kolben. Ein schlauchförmiger, schützender Faltenbalg weist ein erstes mit dem Gehäuse verbundenes Ende und ein zweites Ende auf, wobei das zweite Ende einen Stab umgreift. Der Faltenbalg ist verformbar und weist Poren auf.

Aufgabe der Erfindung ist es, ein Ansauggeräuschdämpfer für einen Bremskraftverstärker zu schaffen, der in einfacher Weise verbaubar ist und eine effiziente Wirkungsweise hinsichtlich Geräuschdämpfung und Strömungswiderstand beim Ansaugen von Luft in den Bremskraftverstärker bewirkt.

Diese Aufgabe wird erfindungsgemäß durch einen Bremskraftverstärker mit einem Ansauggeräuschdämpfer mit den in Patentanspruch 1 angegebenen Merkmalen gelöst. Weitere vorteilhafte Merkmale sind Gegenstand der Unteransprüche.

Die mit der Erfindung hauptsächlich erzielten Vorteile bestehen darin, dass ein Filterelement als Ansauggeräuschdämpfer verwendet wird, das optimal geräuschdämpfend bei geringem Strömungswiderstand der Ansaugluft wirkt. Hierzu ist das Verteilergehäuse des Bremskraftverstärkers von einem gasdurchlässigen und geräuschdämpfenden als Rohr ausgebildeten Filterelement umgeben, das formstabil ausgebildet und mit einer Vielzahl von Poren ausgeführt und stirnseitig über eine Kappe dicht abgeschlossen ist. Durch diese Ausbildung des Filterelements kann das Maß der Geräuschdämpfung und die Größe des Strömungswiderstandes optimal eingestellt werden. Insbesondere besteht das Filterelement aus einem poröse gesintertem Werkstoff. Eine mögliche vielseitige Verwendbarkeit des Filterelements kann durch Ausbildung insbesondere durch die Größe der Poren sowie durch die Wandstärke des Rohrelements beeinflußt werden.

Da die Ansaugfläche des Filterelements eine Länge aufweist, die sich zwischen einer Verbindung am Verteilergehäuse und einer weiteren Verbindung an der Kappe ergibt, kann eine maximal große Ansaugfläche geschaffen werden, wodurch der Zielkonflikt aus Geräuschdämpfung und Strömungswiderstand günstig beeinflußbar ist.

Durch die Verwendung eines porösen, gesinterten Kunststoff-Werkstoffs für das Filterelement ist eine maximale Geräuschdämpfung bei geringem Strömungswiderstand möglich und darüber hinaus ist das Filterelement formstabil ausgeführt, wodurch kein zusätzliches Träger oder Stützgehäuse erforderlich wird.

Das Filterelement ist vorzugsweise koaxial zur Hülse eines Gehäuses des Bremskraftverstärkers angeordnet und erstreckt sich bis nahe der Kappe, wobei die Ansaugluft labyrinthartig dem Gehäuse zuführbar ist. Insbesondere erstreckt sich das Filterelement über die gesamte mögliche Länge dieser Hülse des Gehäuses hinaus, so daß sich zwischen der stirnseitigen Kappe des Filterelements und einer Mündungsöffnung der Hülse ein Einströmraum für die Ansaugluft ergibt.

In der stirnseitigen Kappe des Filterelements ist eine Aufnahme für eine Betätigungsstange des Bremskraftverstärkers vorgesehen.

Nach weiteren Ausführungen der Erfindung können sowohl das Filterelement als auch die Kappe aus einem gleichen gasdurchlässigen und geräuschdämpfenden Material bestehen. Desweiteren kann das Filterelement mit der Kappe auch einteilig ausgeführt sein und gemeinsam aus einem gasdurchlässigen und geräuschdämpfenden Material insgesamt bestehen.

Zusammenfassend bestehen die Vorteile des Filterelements nach der Erfindung wie nachstehend aufgeführt darin:
Das verwendete Material für das Filterelement ist porös gesinterter Kunststoff (z.B. Polyethylen) welches sehr stark geräuschdämpfend bei geringem Strömungswiderstand wirkt. Geräuschdämpfung und Strömungswiderstand sind über die verwendete Porengröße und Wandstärke des Filterelements einstellbar.

Der Zielkonflikt aus Geräuschdämpfung und Strömungswiderstand wird durch Verwendung einer möglichst großen Ansaugfläche günstig beeinflußt.

Durch die Freizügigkeit der Formgebung des mechanisch festen gesinterten Materials des Filterelements ist eine Anpassung an den vorhandenen Bauraum und damit eine weitere Vergrößerung der Ansaugfläche in einfacher Weise möglich.

Durch Verwendung eines bei Unterdruck formstabilen Materials ist kein zusätzliches Träger- oder Stützgehäuse erforderlich, wie dies bei Verwendung von Geräuschdämpfern aus weichem Schaum (z.B. Polyurethan-Schaum) der Fall ist. Ein solches bekanntes Träger- oder Stützgehäuse würde die tatsächliche Ansaugfläche reduzieren.

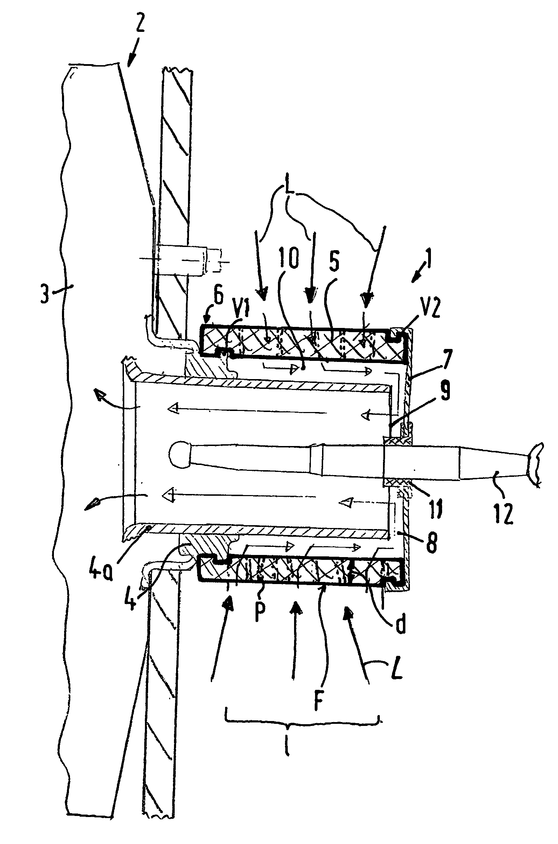

Ein Ausführungsbeispiel der Erfindung ist in der Zeichnung dargestellt und wir im folgenden näher beschrieben. Die Zeichnung zeigt einen Ansauggeräuschdämpfer bestehend aus einem aus porösem, gesinterten Kunststoff bestehendes Filterelement im Schnitt.

Ein Ansauggeräuschdämpfer 1 für einen Bremskraftverstärker 2, welcher nicht näher dargestellt ist, weist an seinem Steuerventilgehäuse 4, 4a ein als Rohr ausgebildetes Filterelement 5 auf. Dieses ist mit einem Ende 6 am Gehäuse 4 befestigt und an seinem abgekehrten anderen Ende von einer Kappe 7 stirnseitig abgeschlossen.

Das Filterelement 5 besteht aus einem porösen, gesinterten Werkstoff und ist formstabil, das heißt sich selbsttragend ausgebildet. Die eingezeichneten Pfeile sollen die Zuführung von Ansaugluft L in den Bremskraftverstärker 2 darstellen. Durch die Vielzahl von Poren P in der Wandung des Filterelements 5 kann die Ansaugluft L optimal dem Bremskraftverstärker 2 zugeführt werden. Das Filterelement 5 erstreckt sich über die gesamte Länge I des Verteilergehäuses 4, 4a sowie darüber hinaus zur Bildung eines Raumspaltes 8 zwischen dem freien Ende einer Hülse 4a des Gehäuses 4 und der abschließenden Kappe 7. Über diesen Raumspalt 8 wird die Ansaugluft L einer Mündungsöffnung 9 der Hülse 4a zugeführt.

Das Filterelement 5 ist vorzugsweise koaxial zur Hülse 4a des Gehäuses 4 angeordnet, so daß sich ein Ringraum 10 ergibt, über den die Ansaugluft L zur stirnseitigen Mündungsöffnung 9 geführt wird.

In der Kappe 7 ist eine Aufnahme 11 für eine Betätigungsstange 12 des Bremskraftverstärkers 2 vorgesehen.

Das Filterelement 5 und die Kappe 7 können aus einem gleichen Material hergestellt sein. Ferner kann das Filterelement 5 mit der Kappe 7 auch einteilig aus einem gleichen Material bestehen.

## Patentansprüche

1. Bremskraftverstärker mit einem Ansauggeräuschdämpfer für den Bremskraftverstärker, dessen pedalseitiges Steuerventilgehäuse von einem als Rohr ausgebildeten gasdurchlässigen und geräuschdämpfenden Filterelement (5) umschlossen ist, das mit einer Vielzahl von Poren (P) ausgeführt und stirnseitig über eine Kappe (7) dicht abgeschlossen ist, **dadurch gekennzeichnet, dass** das Filterelement (5) als formstabiles Rohr ausgebildet ist.

2. Bremskraftverstärker nach Anspruch 1, **dadurch gekennzeichnet, dass** das Filterelement (5) aus einem porösen, gesintertem Kunststoff-Werkstoff besteht.

3. Bremskraftverstärker nach den Ansprüchen 1 oder 2, **dadurch gekennzeichnet, dass** Ansaugluft (L) über die gesamte Außenfläche (F) des Filterelements (5) einem Innenraum (8, 10) des Gehäuses (4, 4a) über eine stirnseitige Mündungsöffnung (9) zuführbar ist.

4. Bremskraftverstärker nach den Ansprüchen 1, 2 oder 3, **dadurch gekennzeichnet, dass** die Ansaugfläche (F) des Filterelements (5) eine Länge (I) aufweist, die sich zwischen der Verbindung (V1) am Gehäuse (4, 4a) und der Verbindung (V2) an der Kappe (7) ergibt.

5. Bremskraftverstärker nach einem oder mehreren der vorhergehenden Ansprüche, **dadurch gekennzeichnet, dass** das Filterelement (5) koaxial zur Hülse (4a) des Gehäuses (4, 4a) angeordnet ist, und sich bis nahe der Kappe (7) erstreckt und die Ansaugluft (L) labyrinthartig über den stirnseitigen Raum (8) und dem anschließenden Ringraum (10) dem Inneren des Gehäuses (4a) zuführbar ist.

6. Bremskraftverstärker nach einem oder mehreren der vorhergehenden Ansprüche, **dadurch gekennzeichnet, dass** die stirnseitige Kappe (7) des Filterelements (5) eine Aufnahme (11) für eine Betätigungsstange (12) des Bremskraftverstärkers (2) aufweist.

7. Bremskraftverstärker nach einem oder mehreren der vorhergehenden Ansprüche, **dadurch gekennzeichnet, dass** sowohl das Filterelement (5) als auch die stirnseitige Kappe (7) aus einem gleichen gasdurchlässigen und geräuschdämpfenden Material besteht.

8. Bremskraftverstärker nach einem oder mehreren der vorhergehenden Ansprüche, **dadurch gekennzeichnet, dass** das Filterelement (5) mit der Kappe (7) einteilig ausgeführt ist und aus einem gasdurchlässigen und geräuschdämpfenden Material besteht.

## Claims

1. Brake force booster having an intake noise damper for the brake force booster, the pedal-side control valve housing of which brake force booster is surrounded by a gas-permeable and noise-damping filter element (5) which is embodied as a tube and which is formed with a plurality of pores (P) and which is sealingly closed off at the end side by means of a cap (7), **characterized in that** the filter element (5) is embodied as a dimensionally stable tube.

2. Brake force booster according to Claim 1, **characterized in that** the filter element (5) is composed of a porous, sintered plastic material.

3. Brake force booster according to Claims 1 or 2, **characterized in that** intake air (L) can be supplied via the entire outer surface (F) of the filter element (5) to an interior space (8, 10) of the housing (4, 4a) via an end-side aperture opening (9).

4. Brake force booster according to Claims 1, 2 or 3, **characterized in that** the intake surface (F) of the filter element (5) has a length (1) which is formed between the connection (V1) to the housing (4, 4a) and the connection (V2) to the cap (7).

5. Brake force booster according to one or more of the preceding claims, **characterized in that** the filter element (5) is arranged coaxially with respect to the sleeve (4a) of the housing (4, 4a) and extends into the vicinity of the cap (7), and the intake air (L) can be supplied in a labyrinth-like manner via the end-side space (8) and the adjoining annular space (10) to the interior of the housing (4a).

6. Brake force booster according to one or more of the preceding claims, **characterized in that** the end-side cap (7) of the filter element (5) has a receptacle (11) for an actuating rod (12) of the brake force booster (2).

7. Brake force booster according to one or more of the preceding claims, **characterized in that** both the filter element (5) and also the end-side cap (7) is composed of an identical gas-permeable and noise-damping material.

8. Brake force booster according to one or more of the preceding claims, **characterized in that** the filter element (5) is formed in one piece with the cap (7) and is composed of a gas-permeable and noise-damping material.

## Revendications

1. Servofrein comprenant un amortisseur des bruits d'aspiration pour le servofrein, dont le boîtier de soupape de régulation, du côté de la pédale, est entouré par un élément de filtre (5) amortissant les bruits et perméable aux gaz, réalisé sous forme de tube, qui est réalisé avec une pluralité de pores (P) et qui est fermé hermétiquement du côté frontal par le biais d'un chapeau (7), **caractérisé en ce que** l'élément de filtre (5) est réalisé sous forme de tube de forme stable.

2. Servofrein selon la revendication 1, **caractérisé en ce que** l'élément de filtre (5) se compose d'un matériau en plastique fritté poreux.

3. Servofrein selon les revendications 1 ou 2, **caractérisé en ce que** l'air d'aspiration (L) peut être acheminé sur toute la surface extérieure (F) de l'élément de filtre (5) à un espace interne (8, 10) du boîtier (4, 4a) par le biais d'une ouverture d'embouchure (9) du côté frontal.

4. Servofrein selon les revendications 1, 2 ou 3, **caractérisé en ce que** la surface d'aspiration (F) de l'élément de filtre (5) présente une longueur (1) qui s'étend entre la connexion (VI) au boîtier (4, 4a) et la connexion (V2) au chapeau (7).

5. Servofrein selon l'une quelconque ou plusieurs des revendications précédentes, **caractérisé en ce que** l'élément de filtre (5) est disposé coaxialement à la buse (4a) du boîtier (4, 4a) et s'étend jusqu'à proximité du chapeau (7) et l'air d'aspiration (L) peut être acheminé en forme de labyrinthe à l'intérieur du boîtier (4a) par le biais de l'espace (8) du côté frontal et de l'espace annulaire s'y raccordant (10).

6. Servofrein selon l'une quelconque ou plusieurs des revendications précédentes, **caractérisé en ce que** le chapeau (7) du côté frontal de l'élément de filtre (5) présente un logement (11) pour une tige de fixation (12) du servofrein (2).

7. Servofrein selon l'une quelconque ou plusieurs des revendications précédentes, **caractérisé en ce que** l'élément de filtre (5) ainsi que le chapeau (7) du côté frontal se composent d'un matériau identique perméable aux gaz et amortissant les bruits.

8. Servofrein selon l'une quelconque ou plusieurs des revendications précédentes, **caractérisé en ce que** l'élément de filtre (5) et le chapeau (7) sont réalisés d'une seule pièce et se composent d'un matériau perméable aux gaz et amortissant les bruits.
